Europäisches Patentamt

European Patent Office

Office européen des brevets

(19)

(11) Publication number: **0 097 418**
**B1**

# (12) EUROPEAN PATENT SPECIFICATION

(45) Date of publication of patent specification: **11.06.86**

(51) Int. Cl.⁴: **F 16 D 55/224**

(21) Application number: **83302425.0**

(22) Date of filing: **29.04.83**

(54) **Disc brake caliper assembly.**

(30) Priority: **17.06.82 US 389428**

(43) Date of publication of application:
**04.01.84 Bulletin 84/01**

(45) Publication of the grant of the patent:
**11.06.86 Bulletin 86/24**

(84) Designated Contracting States:
**DE FR GB**

(56) References cited:
**EP-A-0 030 502**
**DE-A-2 009 260**
**DE-A-2 701 451**
**GB-A-2 013 801**
**GB-A-2 095 776**
**US-A-3 298 468**

(73) Proprietor: **GENERAL MOTORS CORPORATION**
**General Motors Building 3044 West Grand**
**Boulevard**
**Detroit Michigan 48202 (US)**

(72) Inventor: **Baynes, Gene P.**
**633 Enid Avenue**
**Kettering Ohio 45429 (US)**
Inventor: **Melinat, Wolfgang**
**2520 Coppersmith Avenue**
**Dayton Ohio 45401 (US)**

(74) Representative: **Breakwell, John Neil Bower**
**et al**
**GM Patent Section Luton Office (F6) P.O. Box**
**No. 3 Kimpton Road**
**Luton Beds. LU2 OSY (GB)**

Courier Press, Leamington Spa, England.

## Description

This invention relates to a disc brake caliper assembly as specified in the preamble of claim 1, for example as disclosed in US—A—3 298 468.

With such an arrangement it is possible to achieve separation of frictionally generated brake torque reaction force from caliper squeezing force, with the respective forces being exerted through separate housing and mounting components, such that the caliper housing is not required to carry any of the frictionally generated forces, so that it is possible to eliminate all twisting movements from the caliper housing.

The caliper housing can accordingly be made of light-weight material such as aluminium, and additionally deflection and brinelling of the caliper housing by the brake shoes can be kept to a minimum.

The invention is concerned with achieving improved mounting of the caliper housing, to allow optimum usage of available space over the outer periphery of the brake disc, and so allow the space between the wheel and the outer periphery of the disc to be used to better advantage.

For this purpose a disc brake caliper assembly in accordance with the present invention is characterised by the features specified in the characterising portion of claim 1.

Thereby a relatively simple, compact and lightweight caliper assembly can readily be achieved.

In a specific form of disc brake caliper assembly in accordance with the present invention, inboard and outboard brake pad assemblies are confined for axially slidable movement inside a mounting bracket. With the brake assembly on the front wheel of a vehicle, the mounting bracket is attached to the steering knuckle. On non-steerable wheels, a different mounting structure would provide for securing the mounting bracket to a relatively fixed portion of the vehicle. The caliper assembly is located on and supported by the brake shoes. In one embodiment the shoes are nested slidably in the mounting bracket with an arrangement which locks the shoes against all movement other than slidable movement towards and away from the friction braking surfaces of the disc, using no bolts or pins to support the shoes. A suitable anti-rattle spring between the caliper housing and the mounting bracket minimizes rattle noise. Another embodiment utilises a generally similar mounting arrangement, but with pins to lock the brake shoes against movement other than the axial sliding movement towards and away from the friction surfaces of the disc.

In the drawings:

Figure 1 is a cross-sectional view, with parts broken away and in elevation, of a vehicle wheel provided with a first embodiment of a disc brake caliper assembly in accordance with the present invention;

Figure 2 is a fragmentary elevational view of the structure of Figure 1, with parts broken away, in the direction of arrows 2—2 of Figure 1;

Figure 3 is a fragmentary plan view, with parts broken away and in section, of the structure of Figures 1 and 2, in the direction of arrows 3—3 of Figure 2;

Figure 4 is a fragmentary elevational view of the structure of Figures 1 to 3, with parts broken away, in the direction of arrows 4—4 of Figure 3;

Figure 5 is a fragmentary cross-sectional view, with parts broken away and in elevation, of another embodiment of a disc caliper assembly in accordance with the present invention;

Figure 6 is a fragmentary elevational view of the structure of Figure 5, with parts broken away, in the direction of arrows 6—6 of Figure 5;

Figure 7 is a fragmentary plan view, with parts broken away and in section, of the structure of Figures 5 and 6, in the direction of arrows 7—7 of Figure 6; and

Figure 8 is a fragmentary elevational view of the structure of Figures 5 to 7, with parts broken away and in section, in the direction of arrows 8—8 of Figure 7.

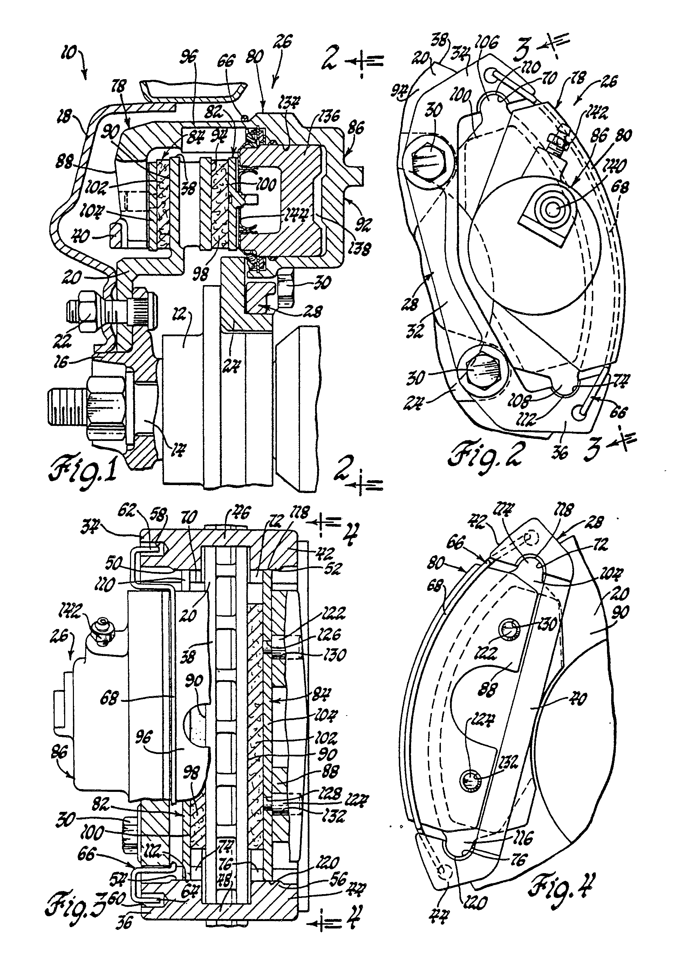

In an embodiment of a disc brake caliper assembly in accordance with the present invention which is shown in Figures 1 to 4 of the drawings, a vehicle wheel brake assembly 10 is illustrated as being associated with an axle housing 12 through which an axle 14 extends. A wheel hub 16 is illustrated as being secured to the axle 14 for rotation therewith. A wheel 18 and a brake disc 20 are secured to the hub in a well-known manner, such as by the use of bolt and nut assemblies 22. Since the particular installation shown is part of a front-wheel drive arrangement, the steering knuckle 24 is illustrated as being attached to the axle housing 12. The steering knuckle 24 provides a means for mounting a disc brake assembly 26.

The mounting arrangement includes a fixed mounting bracket 28 secured to the steering knuckle 24 by bolts 30. The fixed mounting bracket 28 has a side rail 32 extending between and slightly beyond bosses through which bolts 30 extend, and upturned ends 34 and 36 are provided on the ends of the side rail. Inasmuch as the orientation of the brake assembly may vary, this reference to upturned ends is considered to include generally radially outward extensions from the side rails 32 to locations beyond the outer periphery 38 of the disc 20.

The mounting bracket 28 includes another side rail 40 on the other side of the brake disc 20 from the side rail 32. The side rail 40 likewise has upturned ends 42 and 44. The upturned ends 34 and 42 are interconnected by a cross bar 46, and correspondingly the upturned ends 36 and 44 are connected by a cross bar 48. Torque-taking abutments 50 and 52 are provided on the upturned ends 34 and 42 respectively, and correspondingly torque-taking abutments 54 and 56 are provided on the upturned ends 36 and 44.

The upturned ends 34 and 36 have respective recesses 58 and 60 formed therein and extending inwardly towards the centre line of the vehicle. These recesses accommodate the ends 62 and 64 of an anti-rattle spring 66. A spring body 68 of the spring 66 engages a portion of the caliper housing to prevent the housing from rattling relative to the fixed mounting bracket.

The torque-taking abutments are illustrated as being arcuately formed to provide locking means (retainer means) 70 and 72 on the upturned ends 34 and 42, and locking means (retainer means) 74 and 76 on the upturned ends 36 and 44. As will be later described, the locking means co-operate with the brake shoes to prevent brake shoe movement other than towards and away from the friction braking surfaces of the brake disc 20.

The caliper assembly 78 includes a caliper housing 80, an inboard brake pad assembly 82, an outboard brake pad assembly 84 and a brake actuator 86. The caliper housing 80 includes an outer leg 88 extending along an arcuate portion of an outer friction braking surface 90 of the brake disc 20, an inboard leg 92 which includes the actuator 86 and which extends generally along the inner friction braking surface 94 of the disc brake 20, and a bridge section 96 extending over the disc outer periphery and joining the legs together. The inboard brake pad assembly 82 includes a brake pad 98 of friction material attached to a brake shoe 100, and the outboard brake pad assembly 84 includes a brake pad 102 of friction material attached to a brake shoe 104. The brake shoes extend across an arcuate portion of the friction braking surface of the brake disc, and have their ends form arcuately so as to be received within the locking means. Specifically, the brake shoe 100 has an arcuate end 106 received within a lock recess (locking means) 70 and an arcuate end 108 received within a lock recess (locking means) 74. The edge surfaces of the arcuate ends 106 and 108 respectively provide torque-transmitting abutments 110 and 112. The brake shoe 104 has arcuate ends 114 and 116 respectively received within lock recesses (locking means) 72 and 76, with the end edge surfaces respectively providing torque-transmitting abutments 118 and 120. The brake pad assembly 84 is illustrated as being mounted on the caliper housing outer leg 88 by means of spigot-like lugs 122 and 124 which project from a rear face of the brake shoe 104, the lugs being secured to the brake shoe 104 within apertures 126 and 128 and being secured to the caliper housing outer leg 88 within apertures 130 and 132.

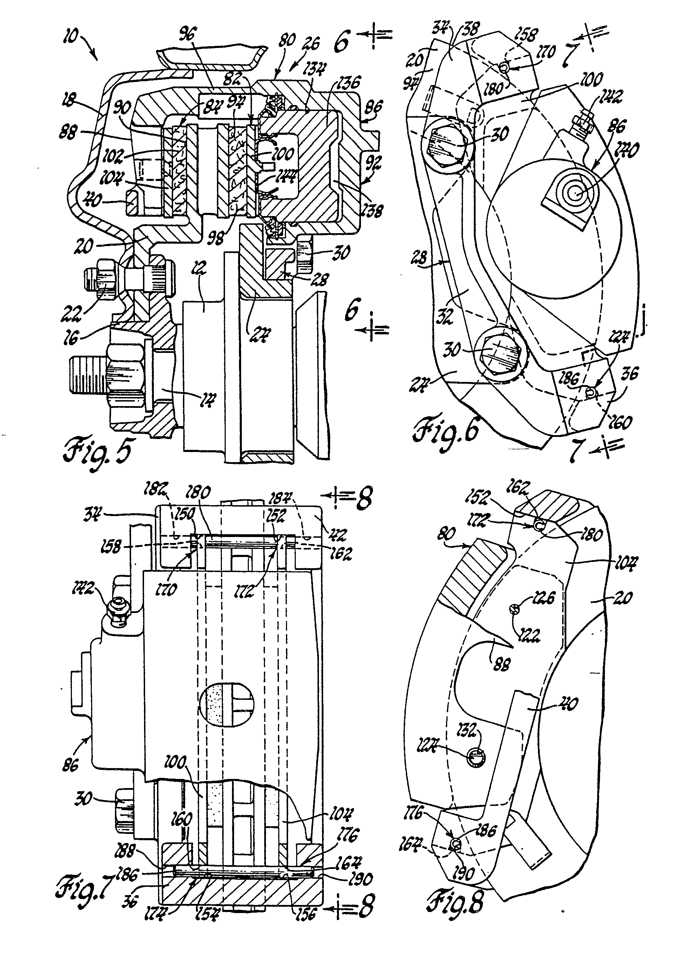

The actuator 86 includes a cylinder 134 formed within the caliper housing inboard leg 96 to reciprocably and sealingly receive an actuator piston 136 therein. The piston and cylinder define a pressure chamber 138 into which hydraulic fluid may be selectively introduced from a master cylinder through an inlet 140. A suitable bleeding arrangement such as bleeder valve 142 is provided. The piston 136 is movable towards the brake disc 20 when the brake actuating pressure is present in the chamber 138, and thereby moves the brake pad assembly 82 in the same direction. The brake pad assembly 82 is secured to the piston 136 by a mounting means 144. The anti-rattle spring 66 has its spring body 68 extending across the caliper housing, as is better seen in Figures 3 and 4: it urges the caliper assembly 78 radially inwardly to minimize rattle.

The embodiment of a disc brake caliper assembly in accordance with the present invention which is shown in Figures 5 to 8 is generally similar to the embodiment shown in Figures 1 to 4, but uses a modified locking (retaining) means. The same reference numerals as used in Figures 1 to 4 are applied to comparable structural elements in Figures 5 to 8, and the modified locking means are identified by reference numerals 170, 172, 174 and 176. Torque-taking abutments 150, 152, 154 and 156 are formed as flat surfaces. The ends of the brake shoes are provided with U-shaped slots 158, 160, 162 and 164 which form parts of the locking means. A roll pin 180 is fitted within apertures 182 and 184 respectively formed in upturned ends 34 and 42 and extends through the slots 158 and 162 of the brake shoes 100 and 104. A similar roll pin 186 is fitted within apertures 188 and 190 formed in upturned ends 36 and 44 and extends through brake shoe slots 160 and 164. Thus the roll pins 180 and 186, the slots 158, 160, 162 and 164 and the apertures 182, 184, 188 and 190 co-operate to define the locking means 170, 172, 174 and 176.

In the operation of both embodiments, during braking the inboard lining 98 and the outboard lining 102 are pressed against the friction braking surfaces 94 and 90 respectively of the brake disc 20 by hydraulic pressure in the chamber 138 acting on the piston 136. This results in clamping forces being exerted through the caliper housing 80, and braking torque forces generated by friction between the linings and the disc faces being transmitted linearly through the brake shoes 100 and 104 into the fixed mounting bracket 28 and steering knuckle 24 through the shoe ends and the torque-transmitting and torque-taking abutments.

To replace the brake pad assemblies, in the embodiment of Figures 1 to 4 the bolts 30 are removed. The caliper assembly 78, with the mounting bracket 28 and the brake pad assemblies, can then be removed from the steering knuckle 24, the wheel 18 having first been removed. To replace worn inboard and outboard brake pad assemblies with new ones, the outboard brake shoe 104 is disconnected from the outer leg 88 by moving it towards the brake pad assembly 82. It is then removed through the disc gap formed in the caliper housing 80 by the caliper legs, and the disc gap extending between the mounting bracket side rails 32 and 40. The inboard brake pad assembly 82 is then disconnected from the piston 136, and is also removed through the disc gaps. New brake pad assemblies are installed in a reverse sequence, and the caliper assembly 78 with mounting bracket 28 is then re-positioned about the brake disc 20 so that the bolts 30 may be re-installed.

In the embodiment of Figures 5 to 8, a similar braking action and transmission of forces takes place as in the embodiment of Figures 1 to 4. To exchange the brake pad assemblies, the roll pins 180 and 186 must be removed. After the wheel 18 has also been removed, the caliper assembly can be lifted out of the mounting bracket 28. After clearing the brake disc, the worn brake pad assemblies are removed and replaced with new ones. The caliper assembly is then re-installed in position on the mounting bracket, and the roll pins are re-installed.

In each embodiment the caliper housing is fully mounted to, supported and retained by its respective inboard and outboard brake shoes. The inboard and outboard brake shoes are slidably mounted to, supported, retained and guided by a support structure including the mounting bracket and locking means. All braking torque forces are transmitted directly from the brake pad assemblies into the mounting bracket. The caliper housing in each instance is subjected only to axial clamping forces, and no brake torque forces enter it. The outer diameter of the disc can be a design optimum, restricted only by the bridge thickness of the caliper housing. The number of caliper parts, critical components and sealing and other machined surface can be kept to a minimum.

**Claims**

1. A disc brake caliper assembly for braking a rotary disc brake of a vehicle, in which a fixed mounting bracket (28) is adapted to be secured to a fixed portion (24) of the vehicle, first and second brake pad assemblies (82 and 84) are slidably mounted in and retained by the bracket (28) for selective movement relative thereto into frictional engagement with respective opposed annular friction braking surfaces (94 and 90) of the brake disc (20), the first and second brake pad assemblies (82 and 84) include respective brake pads (98 and 102) of friction lining material positioned adjacent the respective friction surfaces on the arcuate portion of the brake disc (20) in friction braking relation thereto, a caliper housing (80) comprises a bridge section (96) for extending across the outer periphery of the brake disc (20) and first and second leg sections (92 and 88) for extending from the bridge section (96) alongside the respective friction surfaces (94 and 90) of the brake disc (20), a selectively actuable piston (136) is slidably mounted in a brake actuator portion (86) of the first leg section (92), actuation movement of the piston (136) causes selective movement of the first and second brake pad assemblies (82 and 84) into frictional engagement with the respective friction surfaces (94 and 90) of the brake disc (20), and the caliper housing (80) is operatively mounted on the first and second brake pad assemblies (82 and 84) by way of mounting means (144, 122, 124) providing the only mounting means for the caliper housing, with all braking forces being transmitted directly from the brake pad assemblies (82 and 84) to the mounting bracket (28) so that the caliper housing (80) is subject to only axial forces during braking, characterised in that the mounting means (144, 122, 124) for the caliper housing (80) are disposed on either side of the friction braking surfaces (94 and 90) of the brake disc (20) in alignment with the brake pads (98 and 102) and comprise first mounting means (144) securing the actuator piston (136) to the first brake pad assembly (82) and second mounting means (122 and 124) securing the second leg section (88) to the second brake pad assembly (84) at a location within the outer periphery of the brake disc (20), and that the fixed mounting bracket (28) forms a mounting saddle defined by opposed side rails (32 and 40) having main body portions extending chordally along either side of an arcuate portion of the brake disc (20), the side rails have upturned ends (34, 36 and 42, 44) extending beyond and across the outer periphery of the brake disc (20), the upturned ends (34, 36 and 42, 44) provide torque-taking abutments (50 to 56) for brake shoes (100 and 104) of the brake pad assemblies (82 and 84) and include arcuately spaced cross bars (46, 48) interconnecting the main body portions of the respective side rails (32 and 40), the first and second brake pad assemblies (82 and 84) are received within the fixed mounting bracket (28) and have complementary brake torque-transmitting abutments (110, 112 and 118, 120) co-operating with the bracket abutments (50 to 56) to transmit braking torque to the mounting bracket (28) when the piston (136) is actuated, and the caliper housing (80) is received within the saddle formed by the fixed mounting bracket (28).

2. A disc brake caliper assembly according to claim 1, characterised in that a spring (66) has spring ends (62 and 64) slidably received in recesses (58 and 60) formed in the upturned ends (34 and 36) of the fixed mounting bracket (28), and a spring centre portion (68) engaging one (92) of the caliper housing leg sections (92 and 98) to continually urge the caliper housing (80) in a radially inward direction to reduce rattle, the spring (66) moving with sliding movement of the caliper housing (80) relative to the fixed mounting bracket (28).

3. A disc brake caliper assembly according to claim 1 or 2, characterised in that the brake shoes (100 and 104) of the first and second brake pad assemblies (82 and 84) are formed with shaped end portions (106, 108 and 114, 116) received within complementary lock recesses (70, 74 and 72, 76) formed in the upturned ends (34, 36 and 42, 44) of the side rails (32 and 40) of the fixed mounting bracket (28) to provide for retention of the brake pad assemblies (82 and 84) by the fixed mounting bracket (28) whilst permitting sliding brake actuating and release movement of the brake pad assemblies (82 and 84).

4. A disc brake caliper assembly according to claim 1, characterised in that removable means (180 and 186) forming a part of the fixed mounting bracket (28) extend through the upturned ends (34, 42 and 36, 44) of the mounting bracket side rails (32 and 40) across the outer periphery of the brake disc (20) to provide for retention and locking of the brake pad assemblies (82 and 84) by the fixed mounting bracket (28) whilst permitting sliding brake actuating and release movement of the brake pad assemblies (82 and 84).

5. A disc brake caliper assembly according to any one of claims 1 to 4, characterised in that the second mounting means comprises a plurality of spigot-like lugs (122 and 124) which project from a rear surface of the second brake pad assembly (84) at a location within the outer periphery of the brake disc (20) and are received in respective apertures (130 and 132) in the second leg section (88) of the caliper housing (28).

**Patentansprüche**

1. Scheibenbremsen-Bremssattelanordnung zum Abbremsen einer sich drehenden Bremsscheibe eines Fahrzeuges, bei der eine feststehende Befestigungsklammer (28) zum sicheren Befestigen an einem festen Abschnitt (24) des Fahrzeugs ausgelegt ist, erste und zweite Bremsbelag-Anordnungen (82 und 84) gleitbar in der Klammer (28) angebracht und darin zurückgehalten sind zur wahlweisen Bewegung relativ dazu in Reibeingriff mit jeweils zugewendeten ringförmigen Reib-Bremsflächen (94 und 90) der Bremsscheibe (20), wobei die erste und die zweite Bremsbelaganordnung (82 und 84) jeweils Bremsbeläge (98 und 102) von Reibbelagmaterial enthalten, die der jeweiligen Reibfläche an den gekrümmten Abschnitt der Bremsscheibe (20) benachbart in Reib-Bremsbeziehung dazu angeordnet sind, ein Sattelgehäuse (80) einen Brückenabschnitt (96) enthält, der um den Außenumfang der Bremsscheibe (20) herumreicht, und erste und zweite Schenkelabschnitte (92 und 88), die von dem Brückenabschnitt (96) längs der jeweiligen Reibflächen (94 und 90) der Bremsscheibe (20) abstehen, ein wahlweise betätigbarer Kolben (136) in einem Bremsbetätigungsabschnitt (96) des ersten Schenkelabschnittes (92) gleitbar angebracht ist, wobei eine Betätigungsbewegung des Kolbens (136) wahlweise Bewegung der ersten und zweiten Bremsbelaganordnungen (82 und 84) in Reibeingriff mit der jeweiligen Reibfläche (94 und 90) der Bremsscheibe (20) bewirkt, und das Sattelgehäuse (80) wirksam an der ersten und zweiten Bremsbelaganordnung (82 und 84) mit Hilfe von Befestigungsmitteln (144, 122, 124) angebracht ist, die die einzigen Befestigungsmittel für das Sattelgehäuse ergeben, wobei alle Bremskräfte direkt von den Brembelaganordnungen (82 und 84) auf die Halteklammer (28) übertragen werden, so daß das Sattelgehäuse (80) nur Axialkräften während des Bremsens unterworfen ist, dadurch gekennzeichnet, daß die Befestigungsmittel (144, 122, 124) für das Sattelgehäuse (80) an beiden Seiten der Reib-Bremsflächen (94 und 90) der Bremsscheibe (20) in Ausrichtung mit den Bremsbelägen (98 und 102) angeordnet sind und erste Befestigungsmittel (144) umfassen, welche den Betätigungskolben (136) an der ersten Bremsbelaganordnung (82) sicher befestigen, und zweite Befestigungsmittel (122 und 124), welche den zweiten Schenkelabschnitt (88) an der zweiten Bremsbelaganordnung (44) an einer Stelle innerhalb des Außenumfanges der Bremsscheibe (20) sicher befestigen, und daß die feste Befestigungsklammer (28) einen Befestigungssattel bildet, der durch einander entgegengesetzt liegende Seitenschienen (32 und 40) bestimmt ist, mit Hauptgehäuseabschnitten, welche sich sehnenartig längs beider Seiten eines gekrümmten Abschnittes der Bremsscheibe (20) erstrecken, wobei die Seitenschienen aufwärts gewendete Enden (34, 36 und 42, 44) besitzen, die sich über den Außenumfang der Bremsscheibe (20) hinaus, quer zu diesem erstrecken, wobei die aufwärtsgewendeten Enden (34, 36 und 42, 44) drehmoment-aufnehmende Anschläge (50 bis 56) für Bremsschuhe (100 und 104) der Bremsbelaganordnungen (82 und 84) schaffen und gekrümmte, gegeneinander mit Abstand versehen Querstangen (46, 48) enthalten, die die Hauptgehäuseabschnitte der jeweiligen Seitenschienen (32 und 40) miteinander verbinden, die ersten und zweiten Bremsbelaganordnungen (82 und 84) innerhalb der festen Befestigungsklammer (28) aufgenommen sind und komplementäre Bremsdrehmoment-übertragende Anschläge (110, 112 und 118, 120) besitzen, die mit den Bremsanschlägen (50 bis 56) zusammenwirken zur Übertragung von Bremsdrehmoment zu der Befestigungsklammer (28), wenn der Kolben (136) betätigt ist, und das Sattelgehäuse (80) in dem durch die feste Befestitungsklammer (28) gebildeten Sattel aufgenommen ist.

2. Scheibenbremsen-Sattelanordnung nach Anspruch 1, dadurch gekennzeichnet, daß eine Feder (66) Federenden (62 und 64) besitzt, die in in den aufwärtsgewendeten Enden (34 und 36) der festen Befestigungsklammer (28) ausgebildeten Einschnitten (58 und 60) aufgenommen sind, und einen Feder-Mittenabschnitt (68), der an einem (92) der Sattelgehäuse-Schenkelabschnitte (92 und 98) angreift, um das Sattelgehäuse (80) kontinuierlich in eine radial nach innen weisende Richtung zu drängen, um Rattern zu reduzieren, wobei die Feder (66) sich mit der Gleitbewegung des Sattelgehäuses (80) relativ zu der festen Befestigungsklammer (28) bewegt.

3 Scheibenbremsen-Sattelanordnung nach Anspruch 1 oder 2, dadurch gekennzeichnet, daß die Bremsschuhe (100 und 104) der ersten und zweiten Bremsbelaganordnung (82 und 84) mit geformten Endabschnitten (106, 108 und 114, 116) ausgebildet sind, welche innerhalb in den aufwärtsgewendeten Enden (34, 36 und 42, 44) der Seitenschienen (32 und 40) der festen Befestigungsklammer (28) ausgebildeten komplementären Rastvertiefungen (70, 74 und 72, 76) aufgenommen sind, um für das Zurückhalten der Bremsbelaganordnungen (82 und 84) durch die feste Befestigungsklammer (28) bei gleichzeitigem Zulassen der Bremsbetätigungs- und -löse-Gleitbewegung der Bremsbelaganordnungen (82 und 84) zu sorgen.

4. Scheibenbremsen-Sattelanordnung nach Anspruch 1, dadurch gekennzeichnet, daß entfernbare Mittel (180 und 186), die einen Teil der festen Befestigungsklammer (28) bilden, sich durch die aufwärtsgewendeten Enden (34, 42 und 36, 44) der Befestigungsklammer-Seitenschienen (32 und 40) quer zu dem Außenumfang der Bremsscheibe (20) erstrecken, um für das Zurückhalten und Einrasten der Bremsbelaganordnungen (82 und 84) durch die feste Montageklammer (28) bei gleichzeitigem Zulassen der Bremsbetätigungs- und -löse-Gleitbewegung der Bremsbelaganordnungen (82 und 84) zu sorgen.

5. Scheibenbremsen-Sattelanordnung nach einem der ansprüche 1 bis 4, dadurch gekennzeichnet, daß das zweite Befestigungsmittel eine Vielzahl von zapfenartigen Laschen (122 und 124) umfaßt, die von einer Rückfläche der zweiten Bremsbelaganordnung (84) an einer Stelle innerhalb des Außenumfanges der Bremsscheibe (20) abstehen und in jeweiligen Durchbrüchen (130 und 132) in dem zweiten Schenkelabschnitt (88) des Sattelgehäuses (28) aufgenommen sind.

**Revendications**

1. Etrier pour frein à disque destiné à freiner un disque rotatif de frein d'un véhicule, dans lequel un support fixe de montage (28) est agencé pour être fixé sur une partie fixe (24) du véhicule, des premier et second ensembles à patin de frein (82 et 84) sont montés de manière coulissante dans, et retenus par, le support (28) en vue d'un mouvement sélectif par rapport à celui-ci en contact de frottement avec des surfaces annulaires opposées respectives de freinage par frottement (94 et 90) du disque de frein (20), les premier et second ensembles à patin de frein (82 et 84) comprennent des plaquettes respectives de frein (98 et 102) en un matériau de revêtement de friction disposées au voisinage des surfaces respectives de frottement situées sur la partie courbe du disque de frein (20), suivant une relation de freinage par frottement par rapport à celles-ci, un corps d'étrier (80) comprend une section-pont (96) destinée à s'étendre en travers de la périphérie extérieure du disque de frein (20) et des première et seconde sections-jambes (92 et 88) destinées à s'étendre à partir de la section-pont (96) le long des surfaces respectives de frottement (94 et 90) du disque de frein (20), un piston manoeuvrable de manière sélective (136) est monté de manière coulissante dans une partie d'actionneur de frein (86) de la première section-jambe (92), un mouvement de mise en action du piston (136) provoque un mouvement sélectif des premier et second ensembles à patin de frein (82 et 84) jusqu'en contact à frottement avec les surfaces respectives de frottement (94 et 90) du disque de frein (20), et le corps d'étrier (80) est monté de manière opérationnelle sur les premier et second ensembles à patin de frein (82 et 84) à l'aide de moyens de montage (144, 122, 124) fournissant les seuls moyens de montage prévus pour le corps d'étrier, toutes les forces de freinage étant transmises directement des ensembles à patin de frein (82 et 84) au support de montage (28), de sorte que le corps d'étrier (80) n'est soumis qu'à des forces axiales pendant le freinage, caractérisé en ce que les moyens de montage (144, 122, 124), prévus pour le corps d'étrier (80) sont disposés de part et d'autre des surfaces de freinage par frottement (94 et 90) du disque de frein (20) en alignement avec les plaquettes de frein (98 et 102) et comprennent des premiers moyens de montage (144) fixant le piston d'actionneur (136) sur le premier ensemble à patin de frein (82) et des seconds moyens de montage (122 et 124) fixant la seconde section-jambe (88) au second ensemble à patin de frein (84) en un emplacement situé à l'intérieur de la périphérie externe du disque de frein (20), et en ce que le support fixe de montage (28) forme une selle de montage constituée par des rails latéraux opposés (32 et 40) présentant des parties principales de corps s'étendant suivant une corde de chaque côté d'une partie courbe du disque de frein (20), les rails latéraux présentent des extrémités redressées (34, 36 et 42, 44) s'étendant au-delà et en travers de la périphérie externe du disque de frein (20), les extrémités redressées (34, 36 et 42, 44) fournissent des butées réceptrices de couple (50 à 56) pour des patins de frein (100 et 104) des ensembles à patin de frein (82 et 84) et comprennent des traverses espacées suivant une disposition en arc (46, 48) reliant entre elles les parties principales de corps des rails latéraux respectifs (32 et 40), les premier et second ensembles à patin de frein (82 et 84) sont reçus à l'intérieur du support fixe de montage (28) et présentent des butées complémentaires transmetrices de couple de freinage (110, 112, et 118, 120) coopérant avec les butées de support (50 à 56) afin de transmettre un couple de freinage au support de montage (28) lorsque le piston (136) est mis en action, et le corps d'étrier (80) est reçu à l'intérieur de la selle formée par le support fixe de montage (28).

2. Etrier pour frein à disque selon la revendication 1, caractérisé en ce qu'un ressort (66) présente des extrémités de ressort (62 et 64) reçues de manière coulissante dans des cavités (58 et 60) formées dans les extrémités redressées (34 et 36) du support fixe de montage (28), et une partie centrale de ressort (68) venant en contact d'une (92) des sections-jambes de corps d'étrier (92 et 98) afin de repousser de manière continue le corps d'étrier (80) suivant un sens centripète en vue de réduire le cliquetis, le ressort (66) se déplaçant avec un glissement du corps d'étrier (80) par rapport au support fixe de montage (28).

3. Etrier pour frein à disque selon la revendication 1 ou 2, caractérisé en ce que les patins de frein (100 et 104) des premier et second ensembles à patin de frein (82 et 84) sont formés avec des parties extrêmes conformées (106, 108 et 114, 116) reçues à l'intérieur de cavités complémentaires de blocage (70, 74 et 72, 76) formées dans les extrémités redressées (34, 36 et 42, 44) des rails latéraux (32 et 40) du support fixe de montage (28) afin de fournir une retenue des ensembles à patin de frein (82 et 84) par le support fixe de montage (28) tout en permettant un coulissement de serrage et deserage des ensembles à patin de frein (82 et 84).

4. Etrier pour frein à disque selon la revendication 1, caractérisé en ce que des moyens amovibles (180 et 186) faisant partie du support fixe de montage (28) s'étendent à travers les extrémités redressées (34, 42 et 36, 44) des rails latéraux de support de montage (32 et 40) en travers de la périphérie externe du disque de frein (20) afin de fournir une retenue et un blocage des ensembles à patin de frein (82 et 84) par le support fixe de montage (28) tout en permettant un glissement de serrage et de desserage des ensemble à patin de frein (82 et 84).

5. Etrier pour frein à disque selon l'une quelconque des revendications 1 à 4, caractérisé en ce que les seconds moyens de montage comprennent plusieurs saillies en forme de doigts de centrage (122 et 124) qui font saillie à partir d'une surface arrière du second ensemble à patin de frein (84) en un emplacement situé à l'intérieur de la périphérie externe du disque de frein (20) et sont reçues dans des ouvertures respectives (130 et 132) situées dans la seconde section-jambe (88) du corps d'étrier (28).

Fig.1

Fig.2

Fig.3

Fig.4

**0 097 418**

Fig.5

Fig.6

Fig.7

Fig.8

2